# EUROPÄISCHE PATENTANMELDUNG

(11) **EP 2 216 236 A1**
(43) Veröffentlichungstag der Anmeldung: **11.08.2010**
(21) Anmeldenummer: 10001198.0
(22) Anmeldetag: 05.02.2010
(51) Int. Cl.: B62D 15/02, G01S 15/93

(54) **Verfahren zur Erkennung von Objekten im Umfeld eines Fahrzeugs**

(30) Priorität: 07.02.2009 DE 102009007884
(71) Anmelder: Valeo Schalter und Sensoren GmbH, 74321 Bietigheim-Bissingen (DE)
(72) Erfinder: Jecker, Nicolas, 73728 Esslingen (DE); Geiger, Tobias, 74321 Bietigheim-Bissingen (DE)

(57) **Zusammenfassung**

Es wird ein Verfahren zur Erkennung gering erhabener Objekte im Umfeld eines Fahrzeugs (10) beschrieben, bei welchem Verfahren mittels mindestens eines Sensors Abstände von sich im Umfeld befindlichen Objekten zu dem Fahrzeug (10) ermittelt werden. Dabei wird zunächst die Empfindlichkeit des mindestens einen Sensors derart stark erhöht, so dass der Sensor selbst zu gering erhabenen Objekten mit ungünstiger Geometrie Abstände ermittelt. Dann werden auf Störungen beruhende Abstände, für die der derart empfindlich eingestellte Sensor empfänglich ist, gefiltert, indem durch Erzeugung von Entfernungsdaten bestehend jeweils aus einem Abstand und einem Zeitpunkt, zu dem der Abstand bestimmt wurde, ein Verlauf (20) von Abständen erfasst wird. Anschließend wird der Verlauf (20) in bezug auf die Dichte der Entfernungsdaten (06, 07) analysiert, wobei in dem Verlauf (20) dicht an dicht liegende Entfernungsdaten (06) im Umfeld befindlichen Objekten, und in dem Verlauf (20) willkürlich gestreute Entfernungsdaten (07) Störungen zugeordnet werden.

## Beschreibung

### Stand der Technik

Die Erfindung betrifft ein Verfahren zur Erkennung von insbesondere gering erhabenen, beispielsweise eine Parklücke begrenzende Objekten, wie beispielsweise Randsteine, im Umfeld eines Fahrzeugs, vorzugsweise mittels geeigneter Sensoren vorzugsweise einer Fahrassistenzvorrichtung, wie beispielsweise mittels Ultraschallsensoren, gemäß dem Oberbegriff des Anspruchs 1, eine Fahrassistenzvorrichtung gemäß dem Oberbegriff des Anspruchs 9, sowie ein Computerprogrammprodukt gemäß dem Oberbegriff des Anspruchs 11.
Es ist bekannt, Hindernisse im Umfeld eines Fahrzeugs, beispielsweise während eines Einparkvorgangs, beispielsweise durch Abstandsmessungen mittels geeigneter Sensoren, beispielsweise mittels Ultraschallsensoren, zu erkennen bzw. zu erfassen. Darüber hinaus sind im Folgenden kurz als Einparksysteme bezeichnete Fahrassistenzvorrichtungen zur Unterstützung eines Fahrers eines Fahrzeugs beim Einparken bekannt, welche dem Fahrer helfen beispielsweise in eine Parklücke seitlich und/oder längs zur Fahrbahn einzuparken.
Einfache Einparksysteme erkennen bzw. erfassen Objekte bzw. Hindernisse im Umfeld des Fahrzeugs und warnen den Fahrer vor einer Kollision mit diesen durch Ausgabe von Warnsignalen, beispielsweise durch Ausgabe von in Abhängigkeit vom Abstand des Fahrzeugs zu einem Objekt bzw. Hindernis beispielsweise in deren Häufigkeit und/oder Frequenz veränderliche Tonsignale.

Wesentlich komfortablere Einparksysteme vermessen mit geeigneten, beispielsweise seitlich am Fahrzeug angebrachten Sensoren eine mögliche Parklücke, berechnen aus den Lückendaten eine Einparktrajektorie und steuern das Fahrzeug beispielsweise durch aktiven Lenkeingriff oder durch Fahranweisungen an den Fahrer entlang der Einparktrajektorie in die Parklücke. Während des Einparkvorgangs bzw. beim Einparken wird die Distanz zu die Parklücke begrenzenden Objekten bzw. zu Hindernissen überwacht.

Insbesondere Hindernisse die sich nur wenig über die Fahrbahnoberfläche und typischerweise bis deutlich unterhalb des Einbauorts von beispielsweise auf Höhe der Stoßstangen eines Fahrzeugs angeordneten Sensoren erheben, können beispielsweise bei dichter Annäherung des Fahrzeugs nicht mehr oder nur schlecht erfasst werden. Beispiele für solche Hindernisse sind Bord- oder Randsteine. Ähnlich verhält es sich, wenn ein zu erfassendes Hindernis eine ungeschickte Geometrie aufweist, welche zur Erkennung bzw. Erfassung verwendete, von dem geeigneten Sensor ausgesandte Signale, im Beispiel eines Ultraschallsensors sind dies Ultraschallwellen, nicht oder nicht vollständig in Richtung zum Sensor zurück reflektiert, sondern z.B. nach oben weg streut. Dadurch wird ein sehr schwaches Signal zurück reflektiert. Eine besonders schwierige Erkennung bzw. Erfassung ergibt sich außerdem für solche Hindernisse, die einerseits nur gering erhaben sind und andererseits die zu deren Erkennung bzw. Erfassung verwendeten Signale, wie z.B. Ultraschallwellen, nicht oder nicht vollständig zurück zum Sensor, sondern z.B. nach oben reflektieren. Ein Beispiel für ein solches Hindernis ist ein nach oben orientierter Bord- oder Randstein, der beispielsweise im Bereich von Ein- und Ausfahrten, verkehrsberuhigten Zonen und dergleichen häufig anzutreffen ist.

### Offenbarung der Erfindung

Eine Aufgabe der Erfindung ist es, ein Verfahren der eingangs genanten Art zu entwickeln, welches die Zuverlässigkeit einer Erkennung bzw. Erfassung gering erhabener Objekte steigert.

Die Aufgabe wird gelöst durch ein Verfahren zur Erkennung gering erhabener, beispielsweise eine Parklücke begrenzender Objekte, wie beispielsweise Randsteine, im Umfeld eines Fahrzeugs, bei welchem Verfahren mittels mindestens eines Sensors vorzugsweise einer Fahrassistenzvorrichtung, wie beispielsweise mittels mindestens eines Ultraschallsensors, Abstände von sich im Umfeld befindlichen Objekten zu dem Fahrzeug ermittelt werden. Erfindungsgemäß ist dabei vorgesehen, dass zunächst die Empfindlichkeit des mindestens einen Sensors derart stark erhöht wird, so dass sichergestellt ist, dass der Sensor selbst zu gering erhabenen Objekten mit ungünstiger Geometrie Abstände ermittelt. Anschließend werden auf Störungen beruhende, fehlerhafte Abstände, für die der derart empfindlich eingestellte Sensor empfänglich ist, gefiltert, indem durch Erzeugung und beispielsweise Zwischenspeicherung von Entfernungsdaten bestehend jeweils aus einem Abstand und einem Zeitpunkt, zu dem der Abstand bestimmt bzw. ermittelt wurde, ein Verlauf von Abständen erfasst wird. Der Verlauf wird dann in Bezug auf die Dichte der Entfernungsdaten analysiert, wobei in dem Verlauf dicht an dicht liegende Entfernungsdaten im erfassten Umfeld des Fahrzeugs befindlichen Objekten zugeordnet werden, und in dem Verlauf willkürlich gestreute Entfernungsdaten Störungen zugeordnet werden.
Vorteile der Erfindung gegenüber dem Stand der Technik ergeben sich insbesondere dadurch, dass die verwendeten Sensoren zur Umfelderfassung derart empfindlich eingestellt werden können, dass selbst gering erhabene Objekte mit einer ungünstigen Geometrie erfasst werden können. Durch das erfindungsgemäße Verfahren werden Störungen entfernt, die sich durch die hohe eingestellte Empfindlichkeit der Sensoren ergeben, wie etwa Rauschen, Empfang mitfliegender Signale und dergleichen, wodurch eine höhere Zuverlässigkeit bei der Erkennung gering erhabener Objekte erreicht wird, als beim Stand der Technik. Durch eine Anwendung des erfindungsgemäßen Verfahrens in Verbindung mit einer Fahrassistenzvorrichtung wird darüber hinaus die Genauigkeit von Fahrassistenzvorrichtungen, wie beispielsweise von Einparksystemen insgesamt verbessert.
Eine vorteilhafte Ausgestaltung der Erfindung sieht vor, dass eine Mustererkennung durchgeführt wird, bei der aus dem Verlauf geometrische Merkmale extrahiert werden, wie beispielsweise Linien, Flanken, Kreise und dergleichen, und die einem geometrischen Merkmal zugehörigen Entfernungsdaten einem sich im erfassten Umfeld des Fahrzeugs befindlichen Objekt zugeordnet werden.
Dabei ist denkbar, dass zunächst mindestens ein bestimmter, mit hoher Wahrscheinlichkeit gestörte bzw. fehlerhafte Abstände enthaltender Entfernungsbereich definiert wird, innerhalb dem dann anschließend eine Mustererkennung durchgeführt wird, indem die geometrischen Merkmale extrahiert werden. Dabei handelt es sich beispielsweise um einen Entfernungsbereich der spezielle Probleme bereitet, wie etwa ein Entfernungsbereich, in dem mindestens ein Sensor beispielsweise aufgrund seines Einbauorts und seiner Einbaulage im oder am Fahrzeug nicht mehr richtig positioniert ist, um auch gering erhabene Objekte einwandfrei erfassen zu können. Vorzugsweise ist dieser Entfernungsbereich ein Nahbereich vor, neben oder hinter dem Fahrzeug, oder um das Fahrzeug herum.
Eine andere vorteilhafte Ausgestaltung der Erfindung sieht vor, dass bei der Erfassung des Verlaufs ein Bezug zu einer Bewegung des Fahrzeugs hergestellt wird. Eine Bezugnahme auf eine Bewegung des Fahrzeugs erlaubt es z.B. bei bekannter Trajektorie, entlang der sich das Fahrzeug bewegt, eine Plausibilisierung der Zuordnung der Entfernungsdaten zu sich im Umfeld des Fahrzeugs befindlichen Objekten bzw. zu Störungen. Abstände bzw. Entfernungsdaten von sich tatsächlich im Umfeld des Fahrzeugs befindliche Objekten wandern in dem Verlauf mit der Bewegung des Fahrzeugs, wohingegen Abstände bzw. Entfernungsdaten von sich aufgrund von Störungen nur scheinbar im Umfeld des Fahrzeugs befindlichen Objekten unabhängig von der Bewegung des Fahrzeugs sind.
Vorzugsweise wird dabei der Verlauf zur Mustererkennung und/oder zur Filterung der Störungen mit einer Trajektorie verglichen, entlang welcher Trajektorie sich das Fahrzeug bewegt. Beispielsweise können so Signale, die trotz Bewegung des Fahrzeugs entlang der Trajektorie einen gleich bleibenden Abstand aufweisen, einem Rauschen des bzw. der empfindlich eingestellten Sensoren zugeordnet werden.
Eine zusätzliche vorteilhafte Ausgestaltung der Erfindung sieht vor, dass Störungen zugeordnete Entfernungsdaten aus dem Verlauf entfernt werden.

Um beispielsweise auf Störungen verursacht durch mitfliegende Signale zurückzuführende Entfernungsdaten in dem Verlauf zu erkennen und ggf. aus dem Verlauf zu entfernen werden vorzugsweise die Trägerfrequenzen der zur Ermittlung von Abständen von dem Sensor empfangenen Signale bei der Analyse des Verlaufs berücksichtigt.
Besonders bevorzugt werden Entfernungsdaten aus dem Verlauf entfernt, welche Abstände umfassen, wie sie überwiegend durch Störungen verursacht werden. Ein Grundgedanke hierbei ist, dass auf tatsächlich im erfassten Umfeld des Fahrzeugs vorhandenen Objekten beruhende Abstände bzw. Entfernungsdaten in dem Verlauf über eine gewisse Zeit bzw. Strecke stabil sind und/oder ein kontinuierliches Muster abbilden, wohingegen durch Störungen hervorgerufene Abstände willkürlich jittern. Das durch Rauschen verursachte Jittern erzeugt dabei überwiegend fehlerhafte Abstände innerhalb eines bestimmten, gleich bleibenden Entfernungsbereichs. Bewegt sich das Fahrzeug während des im Verlauf berücksichtigten Zeitraums ist es sehr wahrscheinlich, dass sich auch die Abstände von sich tatsächlich im erfassten Umfeld des Fahrzeugs befindlichen Objekten ändert, wohingegen auf Störungen beruhende Abstände sich nicht ändern.
Eine besonders vorteilhafte Ausgestaltung der Erfindung sieht vor, dass der Verlauf beispielsweise nachdem Entfernungsdaten aus dem Verlauf entfernt wurden, welche Abstände umfassen, wie sie überwiegend durch Störungen verursacht werden, um Entfernungsdaten ergänzt wird, die zumindest mit hoher Wahrscheinlichkeit eine Kontur eines sich im erfassten Umfeld tatsächlich befindlichen Objekts nachbilden. Die Ergänzung kann beispielsweise durch Analyse der im erfassten Umfeld des Fahrzeugs befindlichen Objekten zugeordneten Entfernungsdaten unter Berücksichtigung einer vom Fahrzeug zurückgelegten Strecke entlang einer Trajektorie erfolgen.
Die Erfindung ist insbesondere in Verbindung mit einer Fahrassistenzvorrichtung vorteilhaft anwendbar, beispielsweise einer auch als Einparksystem bezeichneten Fahrassistenzvorrichtung zur Unterstützung eines Fahrers eines Fahrzeuges beim Einparken in eine Parklücke. Eine solche Fahrassistenzvorrichtung umfasst vorzugsweise mindestens einen Sensor, vorzugsweise mindestens einen Ultraschallsensor, zur Ermittlung von Abständen von sich im Umfeld befindlichen Objekten zu dem Fahrzeug, sowie einen mit dem mindestens einen Sensor verbundenen Mikroprozessor mit zugehörigen Speichermitteln zur Erfassung eines Verlaufs von Abständen durch Erzeugung von Entfernungsdaten bestehend jeweils aus einem Abstand und einem Zeitpunkt, zu dem der Abstand bestimmt wurde, sowie zur Analyse des Verlaufs in Bezug auf die Dichte der Entfernungsdaten. Das erfindungsgemäße Verfahren weist im Vergleich zum Stand der Technik eine verbesserte Zuverlässigkeit bei der Erkennung gering erhabener Objekte im Umfeld eines Fahrzeugs auf. Eine Anwendung des erfindungsgemäßen Verfahrens in Verbindung mit einer Fahrassistenzvorrichtung ermöglicht somit eine bessere Umfelderfassung und dadurch eine gegenüber dem Stand der Technik verbesserte Zuverlässigkeit der Fahrassistenzvorrichtung.
Eine vorteilhafte Anwendung des erfindungsgemäßen Verfahrens ergibt sich in Verbindung mit einer Fahrassistenzvorrichtung, welche ein geführtes Einparken, ein halbautomatisches Einparken oder ein vollautomatisches Einparken ermöglicht.
Wichtig ist hervorzuheben, dass das erfindungsgemäße Verfahren auch in Verbindung mit einer Fahrassistenzvorrichtung angewandt werden kann, die den Fahrer eines Fahrzeugs beim Ausparken aus einer Parklücke unterstützt.
Eine besonders vorteilhafte Ausgestaltung der Erfindung betrifft ein Computerprogrammprodukt gespeichert auf einem computerverwendbaren Medium, umfassend computerlesbare Programmmittel, welche bei Ausführung des Computerprogrammprodukts auf einem Mikroprozessor mit zugehörigen Speichermitteln oder auf einem Computer diesen zur Durchführung eines oben beschriebenen, erfindungsgemäßen Verfahrens veranlassen.

### Kurze Beschreibung der Zeichnung

Die Erfindung wird nachfolgend anhand eines in der Zeichnung dargestellten Ausführungsbeispiels näher erläutert. Dabei zeigen:
- Fig. 1: Eine schematische Darstellung eines Verlaufs aus Entfernungsdaten umfassend jeweils einen Abstand sowie einen Zeitpunkt, zu dem der Abstand bestimmt wurde.
- Fig. 2: Eine schematische Darstellung des Verlaufs aus Fig. 1 nach Entfernung von Entfernungsdaten, welche Abstände umfassen, wie sie überwiegend durch Störungen verursacht werden.
- Fig. 3: Eine schematische Darstellung des Verlaufs aus Fig. 2 nach Ergänzung um Entfernungsdaten, die eine Kontur eines sich im erfassten Umfeld tatsächlich befindlichen Objekts in dem zuvor entfernten Entfernungsbereich nachbilden.

### Weg zur Ausführung der Erfindung

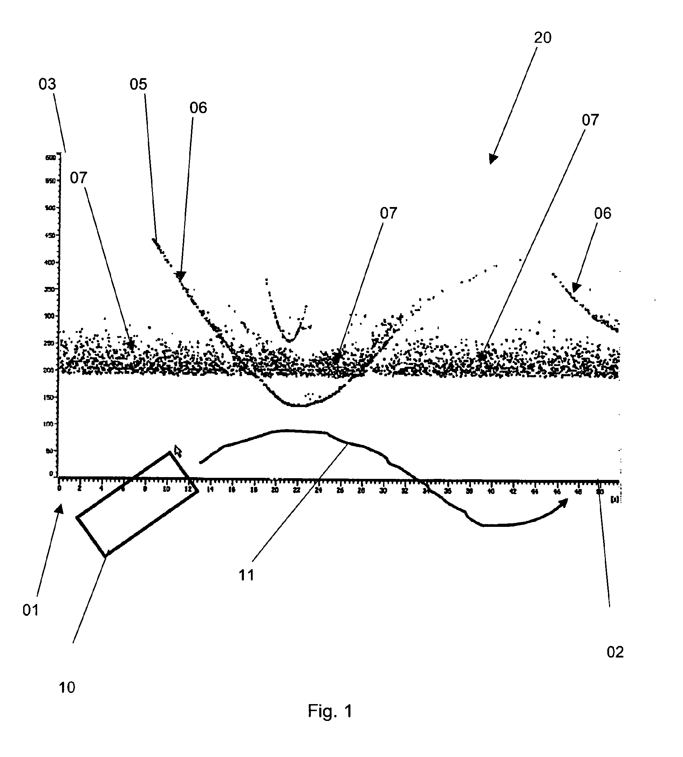

Um gering erhabene, beispielsweise eine Parklücke begrenzende Objekte, wie beispielsweise Randsteine, im Umfeld eines entlang einer Trajektorie 11 gemäß Figur 1 fortbewegenden Fahrzeugs 10 mittels mindestens eines Sensors vorzugsweise einer Fahrassistenzvorrichtung, wie beispielsweise mittels mindestens eines Ultraschallsensors, durch Ermittlung von Abstände von sich im Umfeld befindlichen Objekten zu dem Fahrzeug 10 zu erkennen, ist vorgesehen, zunächst einen oder mehrere empfindliche Sensoren zu verwenden bzw. die Empfindlichkeit des mindestens einen verwendeten Sensors derart stark zu erhöhen, dass sichergestellt wird, dass der Sensor von ihm ausgesandte und anschließend selbst von gering erhabenen Objekten mit ungünstiger Geometrie im Umfeld des Fahrzeugs 10 reflektierte und gestreute Signale noch empfangen und diesen Signalen Abstände zuordnen kann. Dadurch wird sichergestellt, dass ein von einem Sensor ausgesandtes Signal und dessen unterschiedliche Eigenschaften auch von gegenüber z.B. der Fahrbahn gering erhabenen Objekten, wie beispielsweise von Randsteinen, auch von solchen mit ungünstiger Geometrie, reflektiert und wieder empfangen wird.
Ein derart empfindlich eingestellter Sensor ist anfällig für Störungen unterschiedlichen Ursprungs. So neigt ein derart empfindliche eingestellter Sensor dazu, auch so genannte mitfliegende Signale zu empfangen, die beispielsweise von einem anderen Sensor ausgesandt und beispielsweise von einem anderen Objekt, das sich beispielsweise nicht in dem von dem Sensor erfassten Bereich des Umfelds des Fahrzeugs 10 befindet, gestreut und/oder reflektiert wurden. Der empfindlich eingestellte Sensor ordnet diesen mitfliegenden Signalen ebenfalls Abstände zu, die jedoch fehlerhaft sind, da sie keinem im erfassten Bereich des Umfelds befindlichen Objekt zugehörig sind. Außerdem neigt ein derart empfindlich eingestellter Sensor dazu zu rauschen, wodurch er ebenfalls fehlerhaft Abstände nur scheinbar im Umfeld des Fahrzeugs 10 befindlichen Objekten zuordnet.
Um eine hohe Zuverlässigkeit bei der Erkennung gering erhabener Objekte im Umfeld des Fahrzeugs 10 sicherzustellen, müssen diese auf Störungen beruhenden, fehlerhaften Abstände gefiltert werden.
Zur Filterung von auf Störungen beruhenden, fehlerhaften Abständen ist erfindungsgemäß vorgesehen, einen Verlauf 20 der Abstände zu erfassen, indem den Abständen ein zeitlicher Bezug zugeordnet wird, wodurch Entfernungsdaten 06, 07 erzeugt werden bestehend jeweils aus einem Abstand und einem Zeitpunkt, zu dem der Abstand bestimmt wurde. Diese Entfernungsdaten 06, 07 können anschaulich wie in Figur 1 gezeigt in einem Diagramm 01 dargestellt werden, wobei die Zeit die Abszisse 02 und die Entfernung die Ordinate 03 bilden. In einem solchen Diagramm 01 bilden die Entfernungsdaten 06, 07 einzelne Entfernungspunkte.
Der Verlauf 20 wird vorzugsweise über einen vorgebbaren bzw. vorgegebenen Zeitraum erfasst. Dies kann beispielsweise nach dem First-In-First-Out (FIFO) Prinzip erfolgen, bei dem jeweils jüngste Signale bzw. diesen zugeordnete jüngste Entfernungsdaten jeweils älteste Signale bzw. diesen zugeordnete älteste Entfernungsdaten ersetzen.
Alternativ oder zusätzlich ist denkbar, anstelle eines zeitlichen Bezugs einen Bezug der Abstände bzw. der diesen zugeordneten Entfernungsdaten zu einer Bewegung des Fahrzeugs 10 herzustellen und bei dem Verlauf 20 zu berücksichtigen bzw. hierauf den Verlauf 20 zu beziehen. Beispielsweise eignen sich für eine Zuordnung zu einer Bewegung des Fahrzeugs 10 Raddrehimpulse, Global Positioning System (GPS) Daten oder dergleichen. Hierdurch können unabhängig von der Fahrzeugbewegung immer gleiche Abstände bzw. zugehörige Entfernungsdaten Störungen zugeordnet werden, die dann aus dem Verlauf 20 entfernt werden können.

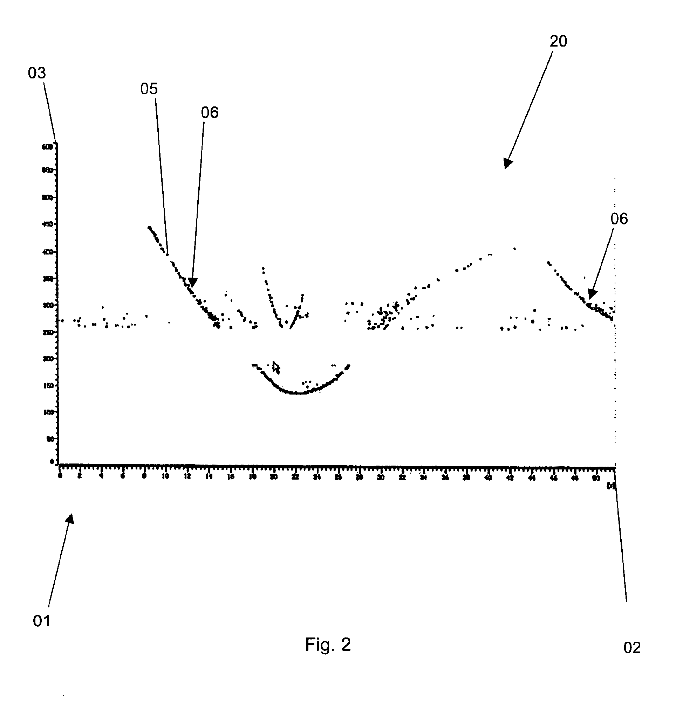

Anschließend wird der Verlauf 20 analysiert. Im Umfeld des Fahrzeugs 10 befindliche Objekte erzeugen kontinuierliche Muster in dem Verlauf 20, die sich durch in dem Verlauf 20 dicht an dicht liegende Entfernungsdaten 06 bzw. anschaulicher in einem zuvor beschriebenen Diagramm 01 dicht an dicht liegende Entfernungspunkte auszeichnen. Entfernungsdaten 07, die auf allgemein unter Störungen zusammengefassten Umständen beruhen, wie z.B. Fehlern des Sensors, etwa Rauschen, oder mitfliegende Signale, weisen eine willkürliche Streuung auf und liegen dadurch in dem Verlauf 20 nicht kontinuierlich dicht an dicht beieinander und bilden dadurch auch kein kontinuierliches Muster in dem Verlauf 20 bzw. anschaulicher im Diagramm 01, wie beispielsweise Linien, Kreise oder Flanken. Erfindungsgemäß ist deshalb vorgesehen, den Verlauf 20 zumindest in Bezug auf die Dichte der Entfernungsdaten 06, 07 zu analysieren.
Hierzu eignet sich beispielsweise eine Mustererkennungsmethode, welche es ermöglicht, aus einer Wolke von Signalen bzw. Abständen einer Kontur eines sich tatsächlich im erfassten Umfeld befindlichen Objekts entsprechende geometrische Merkmale, wie beispielsweise Linien, Flanken, Kreise und dergleichen, zu extrahieren. Außerdem bietet sich an, die empfangenen Signale nach deren Dichte und/oder deren Trägerfrequenz zu untersuchen.
In dem Verlauf 20 dicht beieinander liegende Entfernungsdaten werden einem sich im erfassten Umfeld des Fahrzeugs 10 befindlichen Objekt zugeordnet, wohingegen in dem Verlauf 20 willkürlich verstreut liegende Entfernungsdaten Störungen zugeordnet werden.
Vorzugsweise werden diese willkürlich verstreut liegenden Entfernungsdaten aus dem Verlauf 20 entfernt oder zumindest bei der weiteren Umfeldbeobachtung gemäß Figur 2 nicht weiter berücksichtigt.
Alternativ oder zusätzlich zu einer Untersuchung der Dichte der Entfernungsdaten in dem Verlauf 20 ist denkbar, die Trägerfrequenzen der von dem Sensor empfangenen Signale zu berücksichtigen. Dadurch können beispielsweise mitfliegende Signale erkannt werden und aus dem Verlauf 20 eliminiert oder erst gar nicht in den Verlauf 20 mit aufgenommen werden.

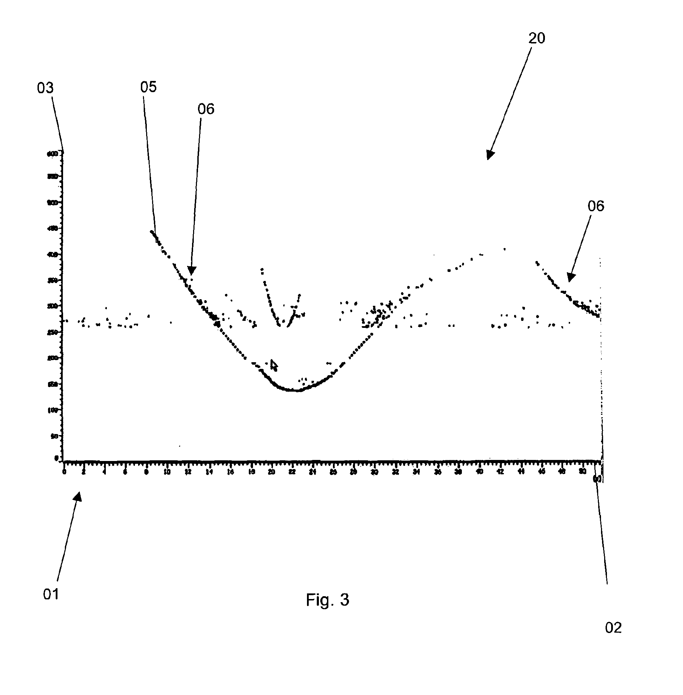

Vorzugsweise werden Entfernungsdaten, welche Abstände umfassen, wie sie überwiegend durch Störungen verursacht werden, wie in Fig. 2 im Vergleich zu Fig. 1 dargestellt aus dem Verlauf 20 entfernt. Ein Grundgedanke hierbei ist, dass auf tatsächlich im erfassten Umfeld des Fahrzeugs 10 vorhandenen Objekten beruhende Abstände bzw. Entfernungsdaten in dem Verlauf 20 über eine gewisse Zeit bzw. Strecke stabil sind und/oder ein kontinuierliches Muster abbilden, wohingegen durch Störungen hervorgerufene Abstände willkürlich jittern. Das durch Rauschen verursachte Jittern erzeugt dabei überwiegend fehlerhafte Abstände innerhalb eines bestimmten, gleich bleibenden Entfernungsbereichs. Bewegt sich das Fahrzeug 10 während des im Verlauf 20 berücksichtigten Zeitraums ist es sehr wahrscheinlich, dass sich auch die Abstände von sich tatsächlich im erfassten Umfeld des Fahrzeugs 10 befindlichen Objekten ändert, wohingegen auf Störungen beruhende Abstände sich nicht ändern.
Ebenfalls ist denkbar, dass zunächst mindestens ein bestimmter, mit hoher Wahrscheinlichkeit gestörte bzw. fehlerhafte Abstände enthaltender Entfernungsbereich definiert wird, innerhalb dem dann anschließend die Mustererkennung durchgeführt wird. Dabei handelt es sich beispielsweise um einen Entfernungsbereich der spezielle Probleme bereitet, wie etwa ein Entfernungsbereich, in dem mindestens ein Sensor beispielsweise aufgrund seines Einbauorts und seiner Einbaulage im oder am Fahrzeug 10 nicht mehr richtig positioniert ist, um auch gering erhabene Objekte einwandfrei erfassen zu können. Vorzugsweise ist dieser Entfernungsbereich ein Nahbereich vor, neben oder hinter dem Fahrzeug 10, oder um das Fahrzeug 10 herum.
Vorzugsweise wird der Verlauf 20 zur Mustererkennung bzw. zur Filterung der Störungen mit der Trajektorie 11 verglichen, entlang der sich das Fahrzeug 10 bewegt. Signale, die trotz Bewegung des Fahrzeugs 10 entlang der Trajektorie 11 einen gleich bleibenden Abstand aufweisen, können so einem Rauschen des bzw. der empfindlich eingestellten Sensoren zugeordnet werden.
Außerdem kann so der Verlauf 20 beispielsweise nachdem Entfernungsdaten aus dem Verlauf 20 entfernt wurden, welche Abstände umfassen, wie sie überwiegend durch Störungen verursacht werden, wie in Fig. 3 dargestellt um Entfernungsdaten ergänzt werden, die zumindest mit hoher Wahrscheinlichkeit eine Kontur 05 eines sich im erfassten Umfeld tatsächlich befindlichen Objekts beispielsweise zumindest in dem zuvor entfernten Entfernungsbereich nachbilden. Die Ergänzung kann beispielsweise durch Analyse der im erfassten Umfeld des Fahrzeugs 10 befindlichen Objekten zugeordneten Entfernungsdaten unter Berücksichtigung einer vom Fahrzeug 10 zurückgelegten Strecke entlang der Trajektorie 11 erfolgen.
Die Figur 1 zeigt ein Beispiel eines Diagramms 01 mit darin eingetragenen, einen Verlauf 20 bildenden Entfernungsdaten bestehend jeweils aus einem Abstand eines Objekts zu einem Fahrzeug 10 und einem Zeitpunkt, zu dem der Abstand gemessen wurde. Die Ordinate 03 des Diagramms 01 entspricht der Entfernung relativ zum Fahrzeug 10, d.h. den von einem an einem Fahrzeug 10 angeordneten Sensor gemessenen Abständen. Die Abszisse 02 entspricht der Zeit und gibt damit die Zeitpunkte an, zu denen die Abstände jeweils gemessen wurden. Das Diagramm 01 enthält auf eine Kontur 05 eines Bord- bzw. Randsteins zurückzuführende Entfernungsdaten 06, sowie durch Störungen, wie etwa Rauschen, verursachte Entfernungsdaten 07. Durch eine Bewegung des Fahrzeugs 10 entlang einer Trajektorie 11 können durch das Rauschen verursachte Entfernungsdaten 07 erkannt werden. In Fig. 1 ist erkennbar, dass die der Kontur 05 des Bord- bzw. Randsteins zuzuordnenden Entfernungsdaten 06 in dem Verlauf 20 bzw. über die von dem Fahrzeug 10 zurückgelegte Strecke entlang der Trajektorie 11 dicht beieinander liegen und eine dem durch die Bewegung des Fahrzeugs 10 bedingten veränderlichen Abstand des Randsteins zum Fahrzeug 10 entsprechende Kontur 05 bilden.
Eine Dichtheitsmethode kann nun dazu verwendet werden, die dicht beieinander liegenden, der Kontur 05 des Randsteins zuzuordnenden Entfernungsdaten 06 von den willkürlich gestreuten, durch Störungen verursachten bzw. Störungen zuzuordnende Entfernungsdaten 07 zu trennen. Werden die weniger dicht als die Entfernungsdaten 06 der Kontur 05 des Randsteins beieinander liegenden Entfernungsdaten 07 entfernt, ergibt sich ein in Fig. 2 dargestellter Verlauf 20.
Wird nun noch die Bewegung des Fahrzeugs 10 entlang der Trajektorie 11 berücksichtigt, kann die Kontur 05 des Randsteins innerhalb des durch Rauschen gestörten Entfernungsbereichs wie in Fig. 3 dargestellt ergänzt werden. Dadurch kann auch ein sich im gestörten Entfernungsbereich befindliches, gering erhabenes Objekt erkannt werden.
Werden aus dem Verlauf 20 diejenigen Störsignale entfernt, die trotz Bewegung des Fahrzeugs 10 einen gleich bleibenden Abstand zum Fahrzeug 10 aufweisen, kann die Kontur 05 des Randsteins durch die erfindungsgemäße Vorgehensweise sehr gut erfasst werden.

## Patentansprüche

1. Verfahren zur Erkennung von insbesondere gering erhabenen Objekten im Umfeld eines Fahrzeugs (10), bei welchem Verfahren mittels mindestens eines Sensors Abstände von sich im Umfeld befindlichen Objekten zu dem Fahrzeug (10) ermittelt werden, **dadurch gekennzeichnet,**
**dass** zunächst die Empfindlichkeit des mindestens einen Sensors derart stark erhöht wird, so dass der Sensor selbst zu gering erhabenen Objekten mit ungünstiger Geometrie Abstände ermittelt, dann auf Störungen beruhende Abstände, für die der derart empfindlich eingestellte Sensor empfänglich ist, gefiltert werden, indem durch Erzeugung von Entfernungsdaten bestehend jeweils aus einem Abstand und einem Zeitpunkt, zu dem der Abstand bestimmt wurde, ein Verlauf (20) von Abständen erfasst wird, und anschließend der Verlauf (20) in bezug auf die Dichte der Entfernungsdaten (06, 07) analysiert wird, wobei in dem Verlauf (20) dicht an dicht liegende Entfernungsdaten (06) im Umfeld befindlichen Objekten, und in dem Verlauf (20) willkürlich gestreute Entfernungsdaten (07) Störungen zugeordnet werden.

2. Verfahren nach Anspruch 1, **dadurch gekennzeichnet, dass** aus dem Verlauf (20) geometrische Merkmale extrahiert werden und die einem geometrischen Merkmal zugehörigen Entfernungsdaten (06) einem sich im Umfeld befindlichen Objekt zugeordnet werden.

3. Verfahren nach Anspruch 2, **dadurch gekennzeichnet, dass** zunächst mindestens ein bestimmter, mit hoher Wahrscheinlichkeit gestörte bzw. fehlerhafte Abstände enthaltender Entfernungsbereich definiert wird, innerhalb dem dann anschließend die geometrischen Merkmale extrahiert werden.

4. Verfahren nach Anspruch 1, 2 oder 3, **dadurch gekennzeichnet, dass** bei der Erfassung des Verlaufs (20) ein Bezug zu einer Bewegung des Fahrzeugs (10) hergestellt wird.

5. Verfahren nach Anspruch 4, **dadurch gekennzeichnet, dass** der Verlauf (20) mit einer Trajektorie (11) verglichen wird, entlang derer sich das Fahrzeug (10) bewegt.

6. Verfahren nach einem der vorhergehenden Ansprüche, **dadurch gekennzeichnet, dass** Störungen zugeordnete Entfernungsdaten (07) aus dem Verlauf (20) entfernt werden.

7. Verfahren nach einem der vorhergehenden Ansprüche, **dadurch gekennzeichnet, dass** die Trägerfrequenzen der zur Ermittlung von Abständen von dem Sensor empfangenen Signale bei der Analyse des Verlaufs (20) berücksichtigt werden.

8. Verfahren nach einem der vorhergehenden Ansprüche, **dadurch gekennzeichnet, dass** Entfernungsdaten (07), welche Abstände umfassen, wie sie überwiegend durch Störungen verursacht werden, aus dem Verlauf (20) entfernt werden.

9. Fahrassistenzvorrichtung zur Durchführung eines Verfahrens nach einem der Ansprüche 1 bis 8, **gekennzeichnet durch** mindestens einen Sensor zur Ermittlung von Abständen von sich im Umfeld eines Fahrzeugs (10) befindlichen Objekten zu dem Fahrzeug (10), sowie einen mit dem mindestens einen Sensor verbundenen Mikroprozessor mit zugehörigen Speichermitteln zur Erfassung eines Verlaufs (20) von Abständen sowie zur Analyse des Verlaufs (20) in bezug auf die Dichte der Entfernungsdaten (06, 07).

10. Fahrassistenzvorrichtung nach Anspruch 9, **dadurch gekennzeichnet, dass** die Fahrassistenzvorrichtung ein geführtes Ein- oder Ausparken oder ein halbautomatisches Ein- oder Ausparken, oder ein vollautomatisches Ein- oder Ausparken ermöglicht.

11. Computerprogrammprodukt gespeichert auf einem computerverwendbaren Medium, umfassend computerlesbare Programmmittel, welche bei Ausführung des Computerprogrammprodukts auf einem Mikroprozessor mit zugehörigen Speichermitteln oder auf einem Computer diesen zur Durchführung eines Verfahrens nach einem der Ansprüche 1 bis 8 veranlassen.
